# EUROPEAN PATENT SPECIFICATION

(11) **EP 1 698 795 B1**
(45) Date of publication and mention of the grant of the patent: **26.08.2009**
(21) Application number: 05425125.1
(22) Date of filing: 04.03.2005
(51) Int. Cl.: F16D 65/097

(54) **Fixing device for disk brake pads**
Befestigungsvorrichtung für Scheibenbremsebelag
Dispositif de fixation pour des plaquettes de freins à disques

(43) Date of publication of application: 06.09.2006
(73) Proprietor: Emmerre s.r.l., 10036 Settimo Torinese (TO) (IT)
(72) Inventor: Marcato, Virginio, 10152 Torino (IT)
(74) Representative: Robba, Pierpaolo

(56) References cited:
- EP-A- 0 694 707
- EP-A- 0 744 559
- EP-A- 1 452 765
- EP-A- 1 491 789
- EP-A- 1 519 070
- US-A- 4 773 511

## Description

### Field of the invention

The present invention concerns a pad for vehicle disc brake suitable for use, for example but not necessarily, on trucks and other heavy transport road vehicles.

### Background Art

In trucks and heavy transport vehicles it is known, for keeping the brake pads well and firmly positioned in the relative brake calipers of the disc brakes, it is known providing a leaf spring, with a substantially arched shape, along a side that, in operating position, is the upper side (or external side, in radial direction) of the brake pad. The function of such springs is contrasting the accelerations and forces which the pads undergo during the functioning of the vehicle, so as to discharge them on a bracket of the brake caliper against which, in known types of brake calipers, the arched central part of the spring generally rests.

Embodiments of such springs are described for example in the documents US 4 773 511 and FR 2 461 161. According to such documents, the leaf spring substantially has arched shape and is provided with two ends bent so as to form substantially a semicircle with curvature opposite to the curvature of the central part of the spring. The spring is fitted on the pad by being deformed it more or less slightly and by inserting the two spring bent ends in corresponding seats made in projections of the pad support plate (the latter is also called "pressure distributing plate"): the more or less light pre-load due to mounting deformations of the spring keeps the latter positioned on the pad. Often such springs are marketed disassembled in the package of the brake pad spare part kit; according to the kind of spring and of pad, the repairer or anyway the operator has either a) to fit the springs on the respective support plates first, and then to fit the pad + spring assembly on the vehicle brake calipers, or b) to fit the springs on pads which are already fitted on the vehicle brake calipers.

In both cases, owing to a badly executed operation such leaf springs can accidentally come unhooked and hurt the operator. Moreover the stiffer is the spring, the more difficult and uncomfortable is mounting the spring on the pad; nevertheless a great stiffness of the spring is desirable for keeping the latter firmly positioned during the vehicle use.

EP744559A1 discloses a disc brake pad, wherein a leaf spring is fastened to the support plate of the pad though the elastic forces of clamping prolongations provided at the ends of the spring. Such prolongations clamp the sides of the support plate and retain the spring through friction only.
EP1452765A2 discloses a disc brake pad, according to the preamble of claim 1, in which on the upper edge of a metal support plate an accessory strip is incorporated. The strip is constituted by one half of the width of its ends being in the manner of respective bends -end bends- in the form of hooks and the other half having the form of an upwardly-curved front edge, whilst the support plate in the end regions of its upper edge have the form of merlons, i.e. raised portions, which same are faced at a certain distance by the edges of the strip. Perpendicular rods are located on the front face on which the lining of friction material is incorporated. For mounting the spring, the end bends are inserted over such rods. To this purpose, the distance between the bend ends coincides with the distance separating the rods.

An object of the present invention is providing a system for fixing a leaf spring on a brake pad, which allows an easier, and less dangerous mounting in comparison with the above described known springs.

### Summary of the Invention

This object is achieved with a pad for disk brake having the features according to claim 1.

The dependent claims concern preferred embodiments of the invention.

The presence of a longitudinal play between the hooking zones of the spring and the hooking zones of the brake pad plate allows both a) an easier mounting of the spring on the plate itself, making it quicker and less tiring -for example in comparison with the case in which, like described in FR 2 461 161, the leaf spring, even if it is not stressed by compression forces normal to the spring itself, is longitudinally pre-loaded when is fixed on the friction material support plate - and b) keeping the leaf spring firmly and safely fixed -even if reversibly- on the respective support plate when the assembly plate + spring is not mounted yet on the brake caliper.

Further advantages that can be achieved with the present invention will appear more clearly to the person skilled in the art from the following detailed description of a particular and nonlimiting embodiment shown in the following schematic figures.

### List of Figures

Figure 1 shows a front view of a first preferred embodiment of a pad for disk brakes according to the present invention;
Figure 2 shows a perspective view of a first end of the leaf spring of the pad of Figure 1;
Figure 2A shows a side section view, according to a longitudinal section plane P-P, of the end of the leaf spring of Figure 2;
Figure 2B shows a side section view, according to a longitudinal section plane P-P, of an end of a leaf spring of a second embodiment of a pad for disk brakes according to the present invention;
Figure 3 shows a perspective view of a second end of the leaf spring of the pad of Figure 1;
Figure 3A shows a side section view, according to a longitudinal section plane P-P, of an end of a leaf spring of a third embodiment of a pad for disk brakes according to the present invention.

### Detailed Description

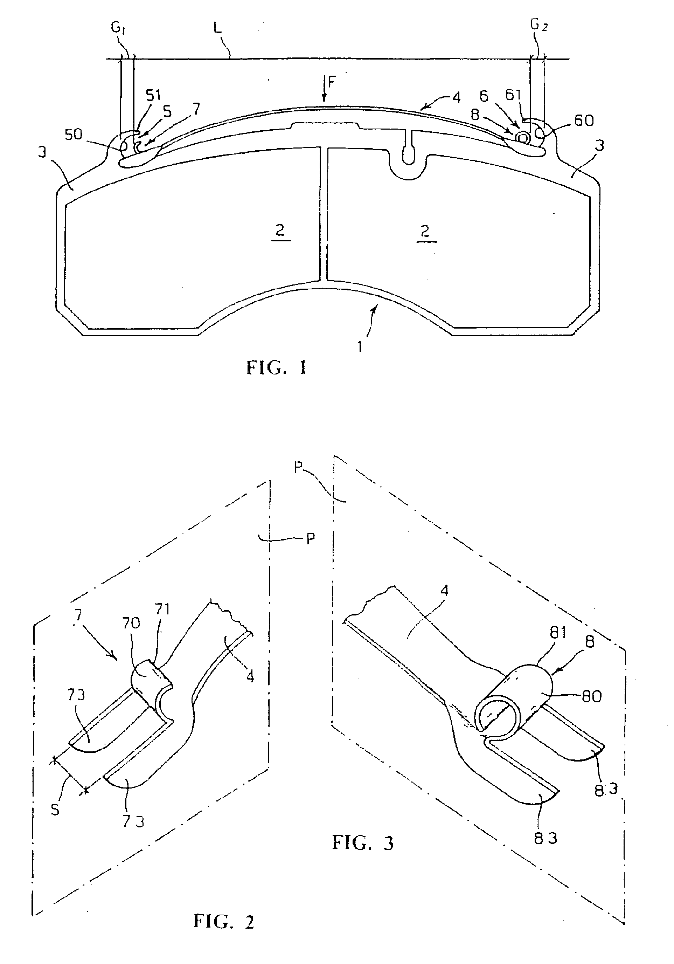

The brake pad for disk brakes of Figure 1, referred to with the overall reference numeral 1, comprises a lining of friction material 2 fixed on a support plate 3 -typically a steel plate. The actuators which press the pad against the brake disk act on the plate 3.

A leaf spring 4 having a substantially arched shape can be reversibly -that is, with no need of disconnecting mechanical or chemical connections such as weldings, glueings, rivetings, irreversible fittings- secured on the brake pad 1, connecting the two hooking zones 5,6 -made on an edge of the support plate 3 and in the following referred to as "first hooking zones 5, 6"- with suitable hooking zones 7, 8 provided at the ends of the leaf spring 4 and referred to as "second hooking zones 7,8" in the following description.

The side of the support plate 3 on which the first hooking zones 5, 6 are positioned will be hereinafter referred to as "fixing side".

In the present embodiment each of the first hooking zones 5,6 is made as a hook-shaped protrusion defining a concave seat 50, 60; the two concave seats 50, 60 face one with another and are both oriented so as to allow fitting therein a suitable part of the ends of the leaf spring 4 by making such end slide about longitudinally to the fixing side of the support plate 3.

During the use of the vehicle, the pad 1 is mounted in suitable seats of the brake caliper e.g. of a truck and the spring 4 is compressed by a suitable bracket (not shown) in the direction of arrow F, so as to apply a reaction to the forces -in particular to vibrations- which tend to push the pad in all directions, but with particular energy upwards -as regards to Figure 1. According to the present invention, the spring 4 and the first hooking zones 5, 6 are shaped and dimensioned in such a way that between the first hooking zones 5, 6 of support plate 3 and the second hooking zones 7, 8 of spring 4 there is a suitable play at least longitudinally to spring 4 itself, when the spring 4 is fixed on the plate 3 but is not compressed by loads normal to the spring itself (arrow F).

In the embodiment of Figure 1 the total longitudinal play G = G1 + G2 amounts about to 2,8 % of the maximum overall longitudinal dimension L of the spring -considered with regard to the second spring hooking zones- in no load conditions and preferably in relation to the curved contact surfaces 70, 80 of the second hooking zone of the spring 4. In other embodiments, not shown, the total longitudinal play G between the leaf spring and the first hooking zones 5, 6 of the support plate can range roughly between 0,05% and 10% and, more preferably, between 0,05% and 6% of the maximum distance L existing -preferably in a direction longitudinal to the spring 4 itself- between two points belonging each of them respectively to a different contact surface70, 80 of a second hooking zone of the spring 4.

In fact it has been observed that such longitudinal play, even if it makes mounting the spring on the support plate 3 easier- for example in comparison with the case, described in FR 2 461 161, in which the leaf spring, even if not stressed by compression forces normal to the spring itself, is longitudinally compressed when it is fixed on the support plate of the friction material- it does not hinder a safe and firm securing -even if reversibly- of spring 4 to the respective support plate 3. With a proper dimensioning of the longitudinal play between the spring 4 and the seats 50, 60 for hooking the latter on the support plate 3 the spring 4 can be compressed in the direction of arrow F -for example by means of a suitable tilting bracket (not shown) hinged to the remainder of the brake caliper- when fitted on the brake caliper, and getting longitudinally deformed can rest against at least one of the concave seats 50, 60, so as to self-center itself.

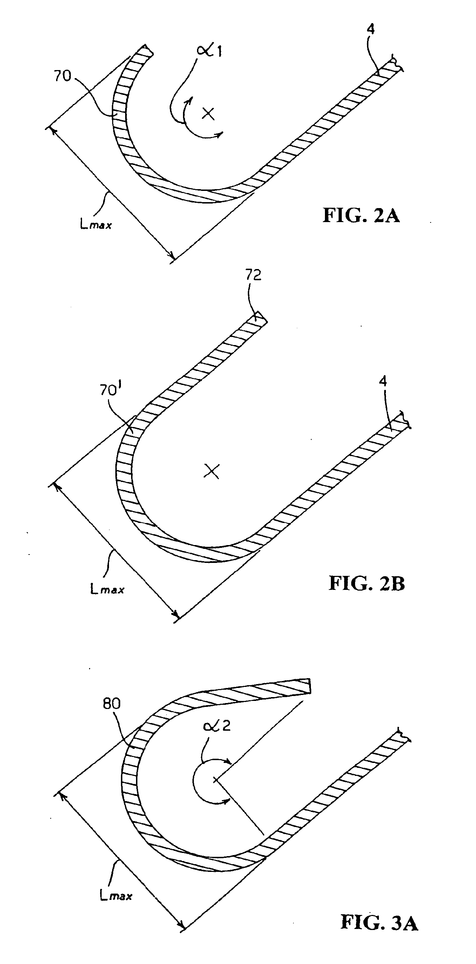

Moreover, in the present preferred embodiment each one of the second hooking zones 7 (resp. 8) of spring 4 is provided with a curved contact surface 70 (resp. 80) (Figures 2,3) suitable for contacting the concave seat 50 (resp. 60) of the corresponding first hooking zone 5 (resp. 6).

In the present embodiment the two curved contact surfaces are obtained by bending backwards the metal sheet tongues at the ends of the leaf spring 4, so as to form metal sheet curls 71, 81. Assuming approximately that such metal sheet curls 71, 81 have substantially constant curvature, preferably the metal sheet curl 71 is bent backwards with a winding angle α1 (Figure 2A) of about 180°, and however not greater than about 180°, while the metal sheet curl 81 is bent backwards with a winding angle α2 (Figure 3A) appreciably greater than 180° (for example 200, 225, 270, 360°): this way it has been noticed that, by fitting the curl 81 which is bent appreciably more than 180° in its concave seat 60 first, and by fitting afterwards the curl 71 which is bent substantially no more than 180° in its concave seat 50, the mounting of spring 4 is made easier for example in comparison with when both the spring ends are provided with two metal sheet curls bent backwards with winding angles α1, α2 greater than 180°. More generally at least one of the end of the leaf spring preferably comprises a curved contact surface (80), the cross-sections of which -according to section planes P3 (Figure 3) longitudinal to the spring 4 itself and normal to the metal sheet of the spring 4- in the zone of maximum width Lmax of the cross-sections themselves (Figure 3A) substantially lack comers; as shown in Figure 3A, the width Lmax of such sections of the curved contact surface 80 is measured in a direction normal to the direction provided for fitting such contact surface in the respective concave seat 60. The width Lmax of the cross sections according to section planes P2 (Figure 2) longitudinal to the spring 4 itself and normal to the metal sheet of spring 4 (Figures 2A, 2B) is measured analogously.

Moreover, generalising once again, preferably at least one of the end 7 of the leaf spring comprises a contact curved surface 70, the cross sections of which-according to section planes P2 (Figure 2) longitudinal to the spring 4 itself and normal to the metal sheet of spring 4- in the maximum width zone Lmax of the contact surface are provided at least with one corner or (Figures 2, 2A, 2B) end with a corner 72.

The matter that the leaf spring 4 is provided, at a first end thereof, with a first contact surface comprising a maximum width zone Lmax1 having longitudinal cross sections - longitudinal cross sections and width are according to the above definition - comprising or ending with a corner edge and, at a second end of a second contact surface comprising a maximum width zone Lmax2 having longitudinal cross-sections substantially with no corners, as already mentioned allows assembling the spring on the support plate easier than, for example, if the ends and the relative second hooking zones of the spring are symmetrical (that is, both spring ends have contact surfaces the maximum width zones Lmax3 of which have longitudinal cross-sections substantially with no corners).

Preferably at least one of the second hooking zones 7 (resp. 8) comprises at least a pair of side prolongations 73 (Figure 2; resp. 83; Figure 3) which can protrude both in the fitting direction of the spring end in the respective concave seat 50 (resp. 60) and in other suitable directions.

Preferably the side prolongations 73 are spaced by a distance or gap S (Figure 2) greater than the thickness of the support plate 3, so that they can be fitted across the thickness plate, guiding and making the fastening of spring 4 to the first hooking zones 5, 6 easier. In the present embodiment the side prolongations 73 do not press the two faces of the support plate 3 like elastic clamps.

The embodiments previously described can be subject to several modifications and variations without departing from the scope of the present invention.

## Claims

1. Pad for disk brake (1), comprising:
- a lining of friction material (2),
- a support plate (3) on which said lining of friction material is fixed, and provided with at least a fixing side on which or near which at least two first hooking zones (5, 6) are provided, and
- a leaf spring (4) having a substantially arched shape and provided, at or near its two ends, with a second hooking zone (7, 8) suitable for engaging with one of the first hooking zones (5, 6) of the support plate, so as to allow reversibly fixing said spring (4) on said fixing side, **characterised in that** a) between said first hooking zones (5, 6) and said spring (4) there is play at least in direction longitudinal to the spring (4) itself and to the fixing side, when the spring is fixed to the support plate (3) without being compressed in a direction normal to the spring itself and to the fixing side; and b) each of said first hooking zones (5, 6) comprises a concave seat (50, 60) suitable for taking inside itself at least part of a second hooking zone (7, 8), the concave seats (50, 60) of the at least two first hooking zones (5, 6) being faced one with another.

2. Pad (1) according to claim 2, **characterised in that** at least one of said second hooking zones (7, 8) is suitable for engaging with at least one of the first hooking zones (5, 6) by inserting at least a part of said second hooking zone (7, 8) in a concave seat (50, 60) of said first hooking zone (5, 6) at least with a displacement longitudinal to said fixing side.

3. Pad (1) according to one or more preceding claims, **characterised in that** at least one of said second hooking zones (8) comprises a contact surface (70, 80), suitable for contacting and/or resting against one of said first hooking zones (6) when the spring (4) is fixed on said fixing side.

4. Pad (1) according to claim 3, wherein said contact surface (80) is substantially curved and its cross-sections according to section planes (P3-P3) longitudinal to the spring (4) itself, in the zone of their maximum width (Lmax), are substantially without corners.

5. Pad (1) according to claim 3 and/or 4, wherein said contact surface (70) is substantially curved and the cross-sections thereof according to section planes (P2-P2) longitudinal to the spring (4) itself in the zone of maximum width (Lmax) of the cross-sections themselves have at least a corner (72) or end with at least a corner (72).

6. Pad (1) according to claims 4 and 5.

7. Pad (1) according to one or more claims 3 to 6, **characterised in that** said total longitudinal play ranges between 0,05% and 10% of the maximum distance (L) existing between two points each of which belongs to a different contact surface (70, 80) of a second hooking zone (7, 8) of the spring (4).

8. Pad (1) according to claim 1 and one or more claims 3 to 6, **characterised in that** said at least one contact surface (70, 80) is suitable for contacting at least one of said concave seats (50, 60) when the spring (4) is fixed on said fixing side.

9. Pad (1) according to one or more preceding claims, **characterised in that** at least one of said second hooking zones (7, 8) comprises at least a pair of side prolongations (73, 83) between which the thickness of said support plate (3) can be inserted without elastically clamp the faces of the support plate (3) itself, so as to keep the end of the spring (4) positioned at or by the thickness of the support plate (3).

## Patentansprüche

1. Scheibenbremsenbelag (1), mit
- einem Belag aus Reibwerkstoff (2)
- einer Trägerplatte (3), auf der der Belag aus Reibwerkstoff befestigt sowie mit mindestens einer Befestigungsfläche versehen ist, auf der oder nahe der mindestens zwei hakenförmige Abschnitte (5, 6) vorgesehen sind, sowie
- eine Blattfeder (4) mit im Wesentlichen bogenförmiger Gestalt und an oder nahe ihrem Ende mit einem zweiten hakenförmigen Abschnitt (7, 8) versehen, der geeignet ist, mit einem der ersten hakenförmigen Abschnitte (5, 6) der Trägerplatte zusammenzuwirken, um so eine reversible Befestigung der Feder (4) auf der Befestigungsfläche zu erlauben,
**dadurch gekennzeichnet, dass**
a) zwischen den ersten hakenförmigen Abschnitten (5, 6) und der Feder (4) zumindest in Längsrichtung der Feder (4) selbst sowie zur Befestigungsfläche vorhanden ist, wenn die Feder an der Trägerplatte (3) befestigt wird, ohne in einer Richtung senkrecht zur Feder selbst und zur Befestigungsfläche zusammengedrückt zu werden; und
b) jeder der ersten hakenförmigen Abschnitte (5, 6) einen konkaven Sitz (50, 60) aufweist, der zur Aufnahme in sich selbst mindestens eines Teils des zweiten hakenförmigen Abschnitts (7, 8) geeignet ist, wobei die konkaven Sitze (50, 60) von den mindestens zwei ersten hakenförmigen Abschnitten (5, 6) einander gegenüberliegen.

2. Belag (1) nach Anspruch 1,
**dadurch gekennzeichnet, dass** mindestens einer der zweiten hakenförmigen Abschnitte (7, 8) für den Eingriff mindestens eines der ersten hakenförmigen Abschnitte (5, 6) geeignet ist, indem mindestens der zweite hakenförmige Abschnitt (7, 8) teilweise in einen konkaven Sitz (50, 60) des ersten hakenförmigen Abschnitts (5, 6) eingeführt wird, und zwar mindestens mit einer Verlagerung längs der Befestigungsfläche.

3. Belag (1) nach einem oder mehreren der vorhergehenden Ansprüche,
**dadurch gekennzeichnet, dass** mindestens einer der zweiten hakenförmigen Abschnitte (8) eine Kontaktfläche (70, 80) aufweist, die sich zur Anlage und/oder Auflage an einem der ersten hakenförmigen Abschnitte (6) eignet, wenn die Feder (4) an der Befestigungsfläche fixiert wird.

4. Belag (1) nach Anspruch 3,
wobei die Kontaktfläche (80) im Wesentlichen gekrümmt ist und ihr Querschnitt nach den Schnitten (P3-P3) längs der Feder (4) selbst im Bereich ihrer größten Breite (Lmax) im Wesentlichen ohne Kanten ist.

5. Belag (1) nach Anspruch 3 und/oder 4,
wobei die Kontaktfläche (70) im Wesentlichen gekrümmt ist und ihr Querschnitt nach den Schnitten (P2-P2) längs der Feder (4) selbst im Bereich ihrer größten Breite (Lmax) des Querschnitts selbst mindestens eine Kante (72) aufweist oder mit mindestens einer Kante (72) endet.

6. Belag (1) nach den Ansprüchen 4 und 5.

7. Belag (1) nach einem oder mehreren der Ansprüche 3 bis 6,
**dadurch gekennzeichnet, dass** das gesamte Längsspiel zwischen 0,05% und 10% des maximalen Abstands (L) liegt, der zwischen zwei Punkten liegt, von denen jeder zu einer anderen Kontaktfläche (70, 80) eines zweiten hakenförmigen Abschnitts (7, 8) der Feder (4) gehört.

8. Belag (1) nach Anspruch 1 und einem oder mehreren der Ansprüche 3 bis 6,
**dadurch gekennzeichnet, dass** mindestens eine Kontaktfläche (70, 80) zur Anlage an mindestens einem der konkaven Sitze (50, 60) geeignet ist, wenn die Feder (4) an der Befestigungsfläche fixiert wird.

9. Belag (1) nach einem oder mehreren der vorhergehenden Ansprüche,
**dadurch gekennzeichnet, dass** mindestens einer der zweiten hakenförmigen Abschnitte (7, 8) mindestens ein Paar seitlicher Verlängerungen (73, 83) aufweist, zwischen denen die Dicke der Trägerplatte (3) ohne die Seiten der Trägerplatte (3) selbst elastisch einzuklemmen, eingefügt werden kann, um das Ende der Feder (4) an der oder durch die Dicke der Trägerplatte (3) in seiner Position zu halten.

## Revendications

1. Plaquette pour freins à disques (1), comprenant :
- un garnissage de matériau de friction (2),
- une plaque de support (3) sur laquelle ledit garnissage de matériau de friction est fixé, et prévue avec au moins un côté de fixation sur lequel ou près duquel au moins deux premières zones d'accrochage (5, 6) sont fournies, et
- un ressort à lame (4), présentant une configuration essentiellement arquée, et prévu au niveau ou à proximité de ses deux extrémités, avec une seconde zone d'accrochage (7, 8) appropriée pour s'engager avec l'une des premières zones d'accrochage (5, 6) de la plaque de support de façon à permettre de fixer de façon inversable ledit ressort (4) sur ledit côté de fixation,
**caractérisée en ce que** :
a) entre lesdites premières zones d'accrochage (5, 6) et ledit ressort (4), il existe du jeu au moins dans une direction longitudinale par rapport au ressort lui-même (4) et au côté de fixation, lorsque le ressort est fixé à la plaque de support (3) sans être comprimé dans une direction perpendiculaire au ressort lui-même et au côté de fixation ; et
b) chacune desdites premières zones d'accrochage (5, 6) comporte un siège concave (50, 60) approprié pour recevoir dans son côté intérieur une partie au moins d'une seconde zone d'accrochage (7, 8), les sièges concaves (50, 60) des au moins deux premières zones d'accrochage (5, 6) étant opposés l'une à l'autre.

2. Plaquette (1) selon la revendication 1, **caractérisée en ce que** au moins l'une desdites secondes zones d'accrochage (7, 8) est appropriée pour s'engager avec au moins l'une desdites premières zones d'accrochage (5, 6) en insérant au moins une partie de ladite seconde zone d'accrochage (7, 8) dans un siège concave (50, 60) de ladite première zone d'accrochage (5, 6) au moins avec un déplacement longitudinal par rapport au dit côté de fixation.

3. Plaquette (1) selon une ou plusieurs des revendications précédentes, **caractérisée en ce qu'**au moins l'une desdites secondes zones d'accrochage (8) comprend une surface de contact (70, 80) appropriée pour être en contact avec, et/ou reposer contre, l'une desdites premières zones d'accrochage (6) lorsque le ressort (4) est fixé sur ledit côté de fixation.

4. Plaquette (1) selon la revendication 3, dans laquelle ladite surface de contact (80) est essentiellement courbe et dans laquelle ses sections transversales selon des plans de coupe (P3-P3) longitudinaux par rapport au ressort (4) lui-même, dans la zone de leur largeur maximale (Lmax), sont essentiellement dépourvues d'angles.

5. Plaquette (1) selon la revendication 3 et/ou 4, dans laquelle ladite surface de contact (70) est essentiellement courbe et dans laquelle ses sections transversales selon des plans de coupe (P2-P2) longitudinaux par rapport au ressort (4) lui-même dans la zone de largeur maximale (Lmax) des sections transversales elles-mêmes présentent au moins un angle (72) ou se terminant avec au moins un angle (72).

6. Plaquette (1) selon les revendications 4 et 5.

7. Plaquette (1) selon l'une ou plusieurs des revendications 3 à 6, **caractérisée en ce que** ledit jeu longitudinal total se situe entre 0,05% et 10% de la distance maximale (L) existant entre deux points dont chacun appartient à une surface de contact différente (70, 80) d'une seconde zone d'accrochage (7, 8) du ressort (4).

8. Plaquette (1) selon la revendication 1 et l'une ou plusieurs des revendications 3 à 6, **caractérisée en ce que** ladite au moins une surface de contact (70, 80) est appropriée pour être en contact avec au moins l'un desdits sièges concaves (50, 60) lorsque le ressort (4) est fixé sur ledit côté de fixation.

9. Plaquette (1) selon l'une ou plusieurs des revendications précédentes, **caractérisée en ce que** au moins l'une desdites secondes zones d'accrochage (7, 8) comprend au moins une paire de prolongements latéraux (73, 83) entre lesquels l'épaisseur de ladite plaque de support (3) peut être insérée sans bloquer élastiquement les faces de la plaque de support (3) elle-même de façon à maintenir l'extrémité du ressort (4) en position au niveau de, ou par l'épaisseur de, la plaque de support (3).
